# EUROPÄISCHE PATENTSCHRIFT

(11) **EP 1 748 573 B1**
(45) Veröffentlichungstag und Bekanntmachung des Hinweises auf die Patenterteilung: **31.03.2010**
(21) Anmeldenummer: 05016487.0
(22) Anmeldetag: 29.07.2005
(51) Int. Cl.: H04B 3/54, F04B 17/00, F04B 47/00, F04B 49/00

(54) **Verfahren zur Datenübertragung zwischen einem Pumpenaggregat und einer Steuereinrichtung sowie ein entsprechend ausgebildetes Pumpensystem**
Method for data transmission between a pump and a controlling unit and corresponding pump.
Méthode pour la transmission de données entre une pompe et une entité de contrôle et pompe correspondante.

(43) Veröffentlichungstag der Anmeldung: 31.01.2007
(73) Patentinhaber: Grundfos Management A/S, 8850 Bjerringbro (DK)
(72) Erfinder: Jungklas Nybo, Peter, 8900 Randers (DK); Jensen, Jørgen, 8870 Langå (DK)
(74) Vertreter: Hemmer, Arnd

(56) Entgegenhaltungen:
- EP-A- 0 998 053
- DE-A1- 4 230 046
- DE-A1- 10 026 931
- DE-C1- 4 128 390
- DE-C1- 10 059 219
- GB-A- 2 394 631
- US-A- 4 471 399
- US-A- 4 479 215
- US-A- 5 158 436
- US-A1- 2003 174 450
- US-B1- 6 771 775
- PATENT ABSTRACTS OF JAPAN Bd. 010, Nr. 192 (E-417), 5. Juli 1986 (1986-07-05) & JP 61 039635 A (OSAKI DENKI KOGYO KK), 25. Februar 1986 (1986-02-25)

## Beschreibung

Die Erfindung betrifft ein Verfahren zur Datenübertragung zwischen einem Pumpenaggregat und einer Steuereinrichtung sowie ein entsprechend ausgebildetes Pumpensystem mit einem Pumpenaggregat und einer von diesem räumlich getrennten Steuereinrichtung.

Insbesondere Tauchpumpensysteme sind häufig so ausgebildet, dass ein Pumpenaggregat vorgesehen ist, welches in ein Bohrloch bzw. einen Pumpensumpf eingesetzt wird, während die zugehörige Steuereinrichtung räumlich beabstandet außerhalb des Bohrloches bzw. Pumpensumpfes angeordnet wird. Zur Steuerung und Überwachung ist daher eine Datenübertragung zwischen dem Pumpenaggregat und der Steuereinrichtung erforderlich.

Ferner werden in jüngster Zeit Pumpenaggregate vermehrt über Frequenzumrichter in ihrer Drehzahl und damit der Leistung gesteuert. Die Drehzahlsteuerung eines Elektromotors durch einen Frequenzumrichter ist beispielsweise aus DE 41 28 390 C1, US 5,158,436 sowie US 2003/174450 A1 bekannt. Bei Tauchpumpen sind diese Frequenzumrichter häufig in der Nähe der Steuereinrichtung, d.h. ebenfalls räumlich beabstandet zu dem Pumpenaggregat angeordnet. Dabei steuert die Steuereinrichtung den Frequenzumrichter an, so dass dieser die gewünschte Frequenz der Versorgungsspannung erzeugt, um die Pumpe mit bestimmter Drehzahl betreiben zu können. Dabei werden bestimmte Daten, welche im Pumpenaggregat selber erfasst werden, beispielsweise Temperaturen etc. berücksichtigt. Um diese Daten vom Pumpenaggregat zu der Steuereinrichtung übertragen zu können, ist eine separate Datenleitung erforderlich, was das gesamte Pumpensystem verteuert und den Installationsaufwand vergrößert.

GB-A 2 394 631 schlägt vor, eine möglichst störungsfreie Frequenz auszuwählen. Beim Betrieb eines Pumpenaggregates mit einem Frequenzumrichter lässt sich jedoch eine solche Frequenz nicht immer finden.

Eine weitere Möglichkeit, Störungen der Datenübertragung zu vermeiden, ist beispielsweise aus DE 100 59 219 C1 bekannt. Dort ist vorgeschlagen, das Trägersignal während der Datenübertragung zu unterbrechen, d. h. die Leistungsübertragung zu den Zeitpunkten der Datenübertragung auszusetzen. Die Unterbrechung der Leistungsübertragung wirkt sich jedoch negativ auf den Betrieb des Pumpenaggregates aus, da dabei der Antriebsmotor kurzzeitig nicht mit Energie versorgt wird.

Es ist daher Aufgabe der Erfindung ein verbessertes Verfahren zur Datenübertragung zwischen einem Pumpenaggrat und einer Steuereinrichtung für den Fall zu schaffen, dass das Pumpenaggregat über einen Frequenzumrichter betrieben wird, wobei das Verfahren einen vereinfachten Aufbau des gesamten Pumpensystems ermöglichen soll.

Diese Aufgabe wird durch ein Verfahren mit den im Anspruch 1 angegebenen Merkmalen gelöst. Bevorzugte Ausführungsformen ergeben sich aus den zugehörigen Unteransprüchen.

Das erfindungsgemäße Verfahren betrifft ein Datenübertragung zwischen einem Pumpenaggregat und einer räumlich beabstandet angeordneten Steuereinrichtung. Eine solche Anordnung ist beispielsweise bei Tauchpumpen der Fall, bei welchem das Pumpenaggregat im Pumpensumpf bzw. einem Bohrloch angeordnet ist, während die Steuereinrichtung an der Oberfläche außerhalb des Pumpensumpfes angeordnet wird. Ferner betrifft das Verfahren eine Datenübertragung für solche Pumpensysteme, bei welchen die Energieversorgung des Pumpenaggregates über einen Frequenzumrichter erfolgt, welcher über eine elektrische Versorgungsleitung mit dem Pumpenaggregat verbunden ist. Dabei wird der Frequenzumrichter in der Regel schon aufgrund seiner Größe räumlich beabstandet von dem versenkten Pumpenaggregat in der Nähe der Steuereinrichtung angeordnet. Das erfindungsgemäße Verfahren für die Datenübertragung vereinfacht die Datenübertragung in der Weise, dass die Datenübertragung nicht über eine separate Datenleitung, sondern über die elektrische Versorgungsleitung erfolgt, welche das Pumpenaggregat mit dem Frequenzumrichter verbindet. Auf diese Weise werden zusätzliche Leitungen vermieden, was den Preis des Pumpensystems verringert und dem Installationsaufwand reduziert.

Die Datenübertragung erfolgt dabei derart, dass eine Auswertung eines von dem Pumpenaggregat oder der Steuereinrichtung empfangenen Datenübertragungssignals nur dann stattfindet, wenn die Datenübertragung in einem störungsarmen Bereich des Trägersignals erfolgt, auf welchem die Daten in der Versorgungsleitung übertragen werden. Dieses Trägersignal wird von dem Versorgungsstrom bzw. der Versorgungsspannung in der Versorgungsleitung gebildet, d.h. es handelt sich hierbei um das von dem Frequenzumrichter erzeugte Ausgangssignal.

Frequenzumrichter erzeugen insbesondere beim Ein- und Ausschalten ihrer elektrischen Leistungsschalter neben der gewünschten Betriebsfrequenz der Versorgungsspannung eine Vielzahl von undefinierten Oberwellen und Störfrequenzen. Erfindungsgemäß wird daher die Datenübertragung so vorgenommen, dass diese nur in Bereichen stattfindet, in denen solche Störungen nicht gegeben sind. Entsprechend wird bei auftretenden Störungen die gesamte Datenübertragung oder aber nur die Datenauswertung ausgesetzt, um nur einwandfreie ungestörte Daten empfangen zu können.

Die störungsarmen Bereiche des Trägersignals, in denen keine oder nur minimale Störungen auftreten, sind erfindungsgemäß zeitliche Bereiche bzw. Abschnitte des Trägersignals, in denen keine oder minimale Störungen auftreten. Dies sind die zeitlichen Bereiche, in denen keine Schaltvorgänge der Leistungsschalter des Frequenzumrichters vorgenommen werden. Während der Schaltvorgänge wird die Datenübertragung und/oder die Datenauswertung entsprechend ausgesetzt, so dass Daten nur dann übertragen und/oder empfangen werden, wenn die Leistungsschalter keine Störungen des Signals verursachen.

Die Datenübertragung und/oder die Auswertung des empfangenen Datenübertragungssignals wird in der Zeit auftretender Störungen des Trägersignals ausgesetzt. Hinsichtlich der Aussetzung bzw. Unterbrechung der Auswertung des Datenübertragungssignals kann das Verfahren so ausgebildet sein, dass bereits der Sender, d.h. je nach Richtung der übertragenen Daten die Steuereinrichtung oder das Pumpenaggregat die Störungen erkennt und in den Bereichen, in denen Störungen auftreten, insbesondere in der Zeit, in der Störungen auftreten, kein Datenübertragungssignal aussendet. Alternativ kann es so sein, dass von dem Sender das Datenübertragungssignal kontinuierlich gesendet wird und lediglich der Empfänger, je nach Richtung der Datenübertragung das Pumpenaggregat oder die Steuereinrichtung, die Bereiche, d.h. insbesondere Zeitperioden, erkennt, in denen Störungen auftreten und in dieser Zeit keine Auswertung des Datenübertragungssignals vornimmt und mit der Auswertung erst fortfährt, wenn die Störung vorüber ist.

Die Datenübertragung zwischen der Steuereinrichtung und der Versorgungsleitung erfolgt vorzugsweise über eine induktive oder kapazitive Kopplung. Auf diese Weise ist eine einfache Signalein- und/oder -auskopplung aus der Versorgungsleitung möglich, ohne dass die elektrische Leistung, welche zum Betrieb des Pumpenaggregates in der Versorgungsleitung übertragen wird, durch die Steuereinrichtung geleitet werden muss.

Die Datenübertragung und/oder die Auswertung des Datenübertragungssignals wird in den Momenten des Ein- und Ausschaltens der Leitungsschalter des Frequenzumrichters ausgesetzt. Zu den Zeitpunkten des Ein- und Ausschaltens der Leistungsschalter des Frequenzumrichters kommt es zu Oberwellen und Störungen in dem Ausgangssignal des Frequenzumrichters. Um diese Störungen für die Datenübertragung unschädlich zu machen, wird die Datenübertragung bzw. Auswertung des Datenübertragungssignals ausgesetzt. Die Zeitpunkte können entweder durch die Steuereinrichtung, welche die Leistungsschalter des Frequenzumrichters steuert, vorgegeben werden oder aber durch Auswertung des Trägersignals, d.h. des Ausgangssignals des Frequenzumrichters erfolgen. Die Möglichkeit, die Zeitpunkte durch die Steuereinrichtung zum Schalten der Leistungsschalter vorzugeben, bietet sich vor allen Dingen dann an, wenn die Datenübertragung von einer Steuereinrichtung zu dem Pumpenaggregat hin ausgesetzt werden soll. Eine von dem jeweiligen Frequenzumrichter unabhängige Datenübertragung ist möglich, wenn die Zeitpunkte zum Aussetzen der Datenübertragung direkt aus dem Frequenzverlauf des Ausgangssignals des Frequenzumrichters entnommen werden. Dies hat den Vorteil, dass das Pumpenaggregat mit beliebigen Frequenzumrichtern kombiniert werden kann.

Auf diese Weise werden vorzugsweise die Zeiten, in denen Störungen des Trägersignals auftreten, automatisch erkannt und es wird während dieser Zeiten die Datenübertragung und/oder die Auswertung des Datenübertragungssignals ausgesetzt. Dieses Vorgehen hat den Vorteil, dass die Einrichtungen für die Datenübertragung nicht mit der Steuereinrichtung, welche die Leistungsschalter des Frequenzumrichters betätigt, unmittelbar zusammenwirken müssen, um die Datenübertragung zu den gewünschten Zeitpunkten zu unterbrechen. Die Datenübertragung kann vielmehr unabhängig allein aufgrund der Auswertung des Trägersignals erfolgen.

Dazu werden die Zeiten, in denen Störungen des Trägersignals auftreten, weiter bevorzugt durch Analyse einer elektrischen Größe, insbesondere Frequenzanalyse oder Phasendetektion des in der Versorgungsleitung übertragenen Signals erkannt. Dies kann auf verschiedene Weise der Signalanalyse erfolgen. Beispielsweise kann eine Frequenzanalyse erfolgen, welche die Vorzeichenwechsel der Amplitude sowie die Periodendauer erfasst und auftretende Störungen in der Weise erkennt, dass störungsbedingte Änderungen im Frequenzverlauf von Änderungen aufgrund der Signalübertragung unterschieden werden. Beispielsweise kann die Periodendauer der auftretenden Störungen kürzer sein als die Periodendauer, welche von dem zu übertragenen Datensignal erzeugt wird, d.h. die Frequenz der Datenübertragung ist kleiner als die Frequenz der auftretenden Störungen. Alternativ kann eine Phasendetektion in der Weise durchgeführt werden, dass ein Referenzsignal sowie ein moduliertes Signal, welches das Datenübertragungssignal bildet, miteinander verglichen bzw. einander überlagert werden. Die Phasenverschiebungen, welche aufgrund der Störungen auftreten, lassen sich von den Phasenverschiebungen aufgrund des übertragenen Signals unterscheiden und durch entsprechende Filter voneinander trennen.

Um das Referenzsignal und ein moduliertes Signal für die Auswertung bzw. Analyse zur Verfügung zu haben, wird vorzugsweise über die Versorgungsleitung in einem Dreileitersystem sowohl das Referenzsignal als auch das modulierte Signal übertragen. Auf diese Weise kann eine sehr einfache Auswertung bzw. Analyse dieser beiden Signale vorgenommen werden. Alternativ ist es auch möglich in einem Zweileitersystem nur das modulierte Signal zu übertragen und das Referenzsignal rechnerisch aus diesem zu ermitteln.

Gemäß einer weiteren bevorzugten Ausführungsform erfolgt die Datenübertragung in einem störungsarmen Frequenzbereich des Trägersignals, wobei vorzugsweise eine Minimierung von Störungen durch ein zwischen dem Frequenzumrichter und dem Pumpenaggregat angeordnetes elektrisches Filter erfolgt. Das bedeutet, dass hinter dem Frequenzumrichter ein Filter angeordnet wird, um die störenden Oberwellen zu dämpfen. Die Signalübertragung erfolgt dann bevorzugt in demjenigen Frequenzbereich, in welchem die größte Dämpfung auftritt, d.h. die Störungen weitgehend eliminiert oder zumindest stark minimiert sind. Vorteilhaft bei dieser Ausführungsform ist, dass ein solches Filter bei der Verwendung von Frequenzumrichtern häufig ohnehin eingesetzt wird, um den Motor nicht mit den vom Frequenzumrichter erzeugten störenden Oberwellen zu belasten.

Für diese Variante der Erfindung ist es wesentlich, den Frequenzbereich zu ermitteln, in welchem das Filter die größte Dämpfung erzeugt. Dazu wird vorzugsweise der Frequenzbereich, in welchem die Datenübertragung erfolgt, abhängig von dem eingesetzten Filter an der Steuereinrichtung und/oder dem Pumpenaggregat eingestellt. D.h. je nach verwendetem Filter muss eine Grundeinstellung an der Steuereinrichtung und/oder dem Pumpenaggregat vorgenommen werden, in der Weise, dass der Frequenzbereich, in welchem das Filter die stärkste Dämpfung aufweist, als Übertragungsfrequenz für die Datenübertragung an der Steuereinrichtung und/oder dem Pumpenaggregat eingestellt wird. Alternativ können die Steuereinrichtung und/oder das Pumpenaggregat selbsttätig den von dem verwendeten Filter abhängigen Frequenzbereich für die Datenübertragung ermitteln. Dies kann beispielsweise dadurch geschehen, dass das Pumpenaggregat und/oder die Steuereinrichtung für die Datenübertragung zunächst mehrere Frequenzbereiche ausprobiert und feststellt, in welchem Bereich eine problemlose Datenübertragung möglich ist. Alternativ kann ein Baustein vorgesehen sein, welcher das Frequenzspektrum des Trägersignals analysiert und den Bereich ermittelt, in welchem wenig Störungen auftreten und dann die Kommunikationsmodule von der Steuereinrichtung und dem Pumpenaggregat so einstellt, dass genau in diesem Frequenzbereich die Datenübertragung stattfindet.

Die Erfindung betrifft ferner ein Pumpensystem zur Durchführung des vorangehend beschriebenen Verfahrens zur Datenübertragung zwischen einem Pumpenaggregat und einer räumlich getrennten Steuereinrichtung. Das Pumpensystem beweist somit ein Pumpenaggregat und eine räumlich von diesen getrennte Steuereinrichtung auf, so dass das Pumpenaggregat beispielsweise als Tauchpumpe in einem Pumpensumpf oder Bohrloch versenkt werden kann und die Steuereinrichtung außerhalb an der Oberfläche angeordnet werden kann. Das Pumpenaggregat weist zur Versorgung mit elektrischer Energie eine elektrische Versorgungsleitung auf, welche zum Anschluss an einen Frequenzumrichter vorgesehen ist. Über den Frequenzumrichter wird die Drehzahl der Pumpe durch Anpassung der Frequenz der Versorgungsspannung in der Versorgungsleitung gesteuert. Erfindungsgemäß weisen das Pumpenaggregat und die Steuereinrichtung zusätzlich Kommunikationsmodule auf, welche eine Datenübertragung zwischen dem Pumpenaggregat und der Steuereinrichtung in einer oder zwei Richtungen, d.h. von dem Pumpenaggregat zu der Steuereinrichtung und/oder von der Steuereinrichtung zu dem Pumpenaggregat ermöglichen. Die Kommunikationsmodule sind so ausgebildet, dass die Datenübertragung über die Versorgungsleitung erfolgen kann, d.h. die Kommunikationsmodule stehen über die Versorgungsleitung zur Datenübertragung miteinander in Verbindung. So wird eine separate Datenleitung vermieden.

Das Datenübertragungssignal wird dem Trägersignal in der Versorgungsleitung, welches das Ausgangssignal des Frequenzumrichters ist, aufmoduliert. Dabei erfolgt die Datenübertragung so, dass eine Auswertung eines von einem der Kommunikationsmodule empfangenen Datenübertragungssignals nur in störungsarmen Bereichen eines von einem Versorgungsstrom bzw. Versorgungsspannung gebildeten Trägersignals erfolgt. Dabei kann auch die Datenübertragung selber, d.h. das Senden bereits so erfolgen, dass die Daten nur in störungsarmen Bereichen des Trägersignals gesendet werden und entsprechend dann auch nur in diesen Bereichen ausgewertet werden. Alternativ kann eine kontinuierliche Übertragung bzw. ein kontinuierliches Senden erfolgen und lediglich die Auswertung der Datenübertragung nur in den Bereichen geschehen, in welchen das Trägersignal störungsfrei oder störungsarm ist. Auf diese Weise ist eine Trennung zwischen Störungen und übertragenen Daten möglich, wie oben anhand des Verfahrens beschrieben wurde. Dabei kann es sich bei den störungsfreien bzw. störungsarmen Bereichen um zeitliche Bereiche des Trägersignals.

Demgemäß ist das Pumpensystem derart eingerichtet, dass die Kommunikation und/oder die Auswertung des Datenübertragungssignals in der Zeit auftretender Störungen des Trägersignals ausgesetzt wird. D.h. während der Zeitdauer, in der Störungen auftreten, werden entweder keine Daten gesendet oder der Empfang bzw. die Auswertung des gesendeten Datenübertragungssignals ausgesetzt. Auf diese Weise wird sichergestellt, dass die übertragenden Daten fehlerfrei empfangen werden können.

Vorzugsweise weist zumindest eines der Kommunikationsmodule einen Signalanalysator, insbesondere in Form eines Frequenzanalysators oder eines Phasendetektors zum Erkennen von Störungen des Trägersignals auf. Auf diese Weise ist es möglich automatisch Störungen im Trägersignal zu erkennen und die Datenübertragung entsprechend anzupassen bzw. auszusetzen, um die Daten fehlerfrei empfangen zu können. So können die Kommunikationsmodule unabhängig von dem eingesetzten Frequenzumrichter arbeiten, da sie die auftretenden Störungen selbsttätig erkennen können. Beispielsweise kann dies durch Überlagerung eines Referenzsignals und eines modulierten Signals geschehen, wobei die Phasenverschiebung aufgrund der Störungen erfasst wird.

Gemäß einer weiteren bevorzugten Ausführungsform sind die Kommunikationsmodule derart ausgebildet, dass eine Kommunikation zwischen den Kommunikationsmodulen, d.h. eine Datenübertragung in einem Frequenzbereich erfolgt, in welchem die Oberwellen des von dem Versorgungsstrom gebildeten Trägersignals gedämpft sind. D.h. das Datenübertragungssignal, welches dem Trägersignal in der Versorgungsleitung aufmoduliert wird, wird in einen Frequenzbereich gelegt, in welchem die Oberwellen des Trägersignals eine große Dämpfung erfahren.

Vorzugsweise ist zur Dämpfung der Oberwellen zwischen dem Frequenzumrichter und der Steuereinrichtung ein elektrisches Filter angeordnet. Ein solches Filter wird beim Einsatz von Frequenzumrichtern, wie bereits oben beschrieben wurde, ohnehin häufig eingesetzt, um störende Oberwellen zu dämpfen. Auf diese Weise wird ein Frequenzbereich geschaffen, welcher störungsarm ist und zur Datenübertragung genutzt werden kann. Somit ist es lediglich erforderlich, die Datenübertragung vom gewählten Frequenzbereich her an das verwendete Filter anzupassen, um die Datenübertragung in den Bereich zu legen, in dem das Filter die größte Dämpfung bietet.

Dies kann beispielsweise dadurch geschehen, dass der Frequenzbereich für die Kommunikation an der Steuereinrichtung und/oder dem Pumpenaggregat einstellbar ist. D.h. der Nutzer schaut, was für ein Filter in der Versorgungsleitung eingesetzt wird und stellt dann manuell über ein Einstellmittel, z.B. einen Schalter an der Steuereinrichtung und/oder dem Pumpenaggregat den gewünschten Frequenzbereich für die Datenübertragung ein. Alternativ kann zumindest eines der Kommunikationsmodule in der Steuereinrichtung oder dem Pumpenaggregat zur selbsttätigen Ermittlung des Frequenzbereiches für die Kommunikation ausgebildet sein. Beispielsweise kann dies dadurch geschehen, dass ein Kommunikationsmodul, z.B. das des Pumpenaggregats verschiedene Frequenzbereiche zur Datenübertragung zu der Steuereinrichtung aufeinander folgend ausprobiert und auf ein Antwortsignal von dem anderen Kommunikationsmodul, z.B. der Steuereinrichtung wartet und dann denjenigen Frequenzbereich einstellt, bei welchem das Antwortsignal empfangen wurde. Alternativ kann eines der Kommunikationsmodule eine Signalauswertungseinrichtung zur Signalauswertung des Trägersignals aufweisen und durch die Signalauswertung den Frequenzbereich ermitteln, in welchem minimale Störungen in Form von Oberwellen gegeben sind.

Die Steuereinrichtung weist vorzugsweise einen Signaltransformator zur induktiven oder kapazitiven Signalübertragung zwischen der Versorgungsleitung und dem Kommunikationsmodul der Steuereinrichtung auf. Auf diese Weise können leicht die zu übertragenen Datenübertragungssignale dem Trägersignal in der Versorgungsleitung aufmoduliert werden, ohne das die gesamte elektrische Versorgungsleistung von der Elektronik der Steuereinrichtung übertragen werden müsste. Vorzugsweise kann auch in dem Pumpenaggregat eine entsprechende induktive oder kapazitive Kopplung des Signals erfolgen.

Da das beschriebene Pumpensystem das zuvor beschriebene Verfahren verwirklicht, ist es zu verstehen, dass Merkmale, welche nur anhand des Verfahrens beschrieben wurden auch bei dem Pumpensystem zum Einsatz kommen können und entsprechend Verfahrensschritte, welche nur im Zusammenhang mit dem Pumpensystem erläutert wurden, auch allgemein bei dem beschriebenen Verfahren Verwendung finden können.

Nachfolgend wird die Erfindung beispielhaft anhand der beigefügten Figuren beschrieben. In diesen zeigt:
- Fig. 1: eine schematische Gesamtansicht eines erfindungsgemäßen Pumpensystems,
- Fig. 2: schematisch die Funktion des in Fig. 1 gezeigten Filters,
- Fig. 3: schematisch die Funktion der erfindungsgemäßen Datenübertragung anhand des Frequenzverlaufes,
- Fig. 4: schematisch ein Modulationsprinzip,
- Fig. 5: schematisch die Signalauswertung ohne Störungen und

- Fig. 6: schematisch die Signalauswertung mit Störungen.

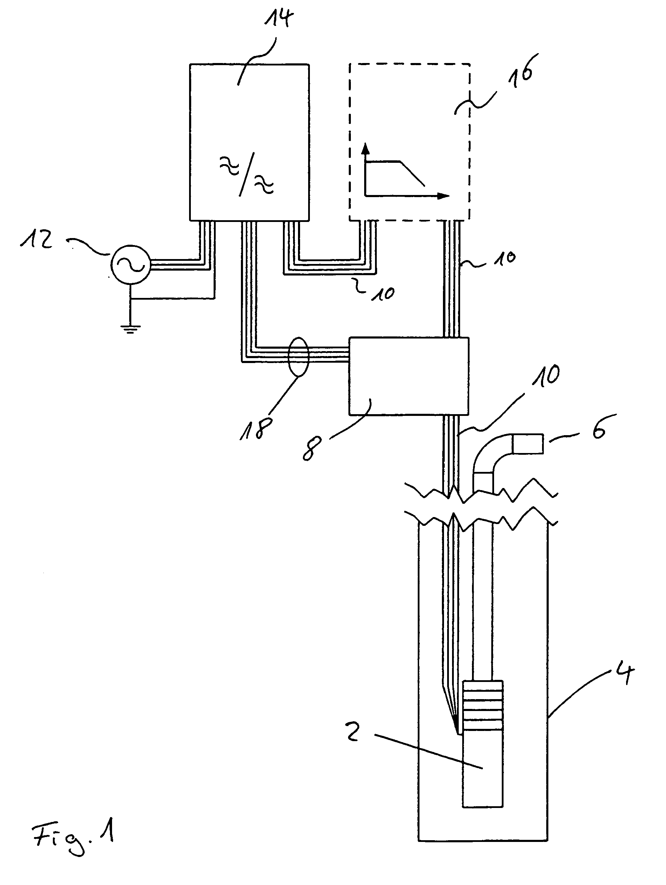

Anhand von Fig. 1 wird der Gesamtaufbau eines erfindungsgemäßen Pumpensystems erläutert. Das Pumpensystem weist eine Tauchpumpe 2 auf, welche in einen Pumpensumpf 4 in bekannter Weise angeordnet wird. Dabei erstreckt sich eine Druckleitung 6 aus dem Pumpensumpf 4 heraus an die Oberfläche. Ferner weist das Pumpensystem eine Steuereinrichtung 8 zur Steuerung des Pumpenaggregates 2 auf, welche ebenfalls außerhalb des Pumpensumpfes 4, d.h. räumlich beabstandet von dem Pumpenaggregat 2 angeordnet ist. Aufgrund der räumlich beabstandeten Anordnung der Steuereinrichtung 8 und Pumpenaggregat 2 ist eine Datenübertragung zwischen beiden erforderlich, um Zustandsdaten, welche im Pumpenaggregat 2 erfasst werden, beispielsweise Druck, Temperatur, etc., an die Steuereinrichtung 8 zu übertragen. Erfindungsgemäß ist hierzu keine separate Datenleitung zur Datenübertragung zwischen dem Pumpenaggregat 2 und der Steuereinrichtung 8 bzw. auch umgekehrt von der Steuereinrichtung 8 zu dem Pumpenaggregat 2 vorgesehen. Vielmehr erfolgt die Kommunikation zwischen Steuereinrichtung 8 und Pumpenaggregat 2 mittels einer Daten- oder Signalübertragung über die Versorgungsleitung 10.

Die Versorgungsleitung 10 liefert die elektrische Energie zu dem Pumpenaggregat 2. Die Energieversorgung des Pumpenaggregats 2 erfolgt ausgehend von einer Stromversorgung 12 über einen Frequenzumrichter 14. Ausgangsseitig des Frequenzumrichters 14 verläuft die Versorgungsleitung 10 zu dem Pumpenaggregat 2, wobei in der Versorgungsleitung 10 im gezeigten Beispiel noch ein Filter 16 zur Dämpfung unerwünschter Oberwellen angeordnet. Diese Störungsfrequenz bzw. Oberwellen entstehen durch das An- und Ausschalten der Leistungsschalter des Frequenzumrichters 14. Diese Störfrequenzen sind jedoch beim Betrieb des Pumpenaggregates 2 unerwünscht, da diese nur zur Erwärmung der Motorwicklungen führen.

Die Steuereinrichtung 8 ist in der Weise mit der Versorgungsleitung 10 verbunden, dass hier ein Signaltransformator vorgesehen ist, über welchen Signale von der Steuereinrichtung 8 in die Versorgungsleitung 10 ein- und ausgekoppelt werden. Es erfolgt hier eine induktive Kopplung, alternativ ist auch eine kapazitive Kopplung möglich. D.h. die Versorgungsleitung 10 ist in der Steuereinrichtung 8 nicht unterbrochen, sondern verläuft hier lediglich durch die induktive oder kapazitive Einkoppeleinrichtung.

Die Steuereinrichtung 8 ist ferner über eine Steuerleitung 18 mit dem Frequenzumrichter 14 zu dessen Steuerung verbunden. So kann die Steuereinrichtung 8 dem Frequenzumrichter 14 vorgeben, welche Frequenz der Versorgungsspannung bzw. des Versorgungsstromes gewählt werden soll, um eine bestimmte Drehzahl bzw. Leistung des Pumpenaggregates 2 zur Verfügung zu stellen.

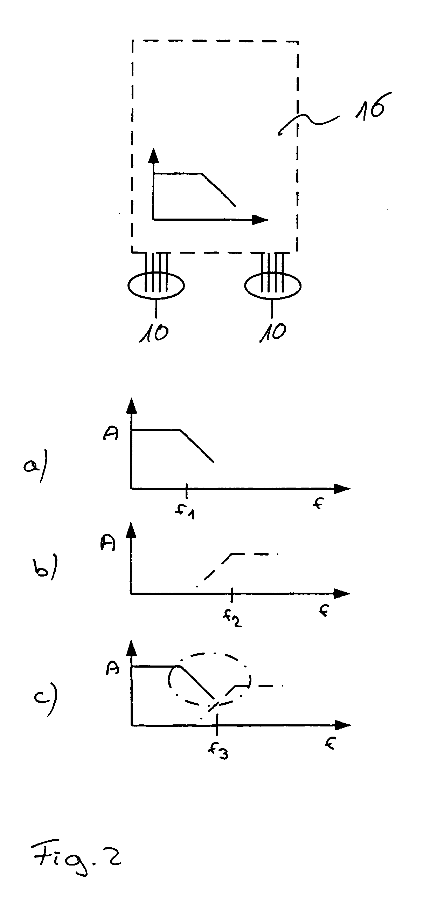

Anhand von Fig. 2 wird die Funktionsweise des Filters 16 noch einmal näher erläutert. Oben in Fig. 2 ist noch einmal schematisch das Filter 16 gezeigt. Anhand der Diagramme a, b und c wird die Filtercharakteristik beschrieben. In den Diagrammen ist schematisch die Amplitude A über der Frequenz f darstellt. So wirkt das Filter wie in a dargestellt grundsätzlich als Tiefpass, d.h. alle Frequenzen oberhalb einer Grenzfrequenz f₁ werden gedämpft, während die niedrigeren Frequenzen durchgelassen werden. Diese niedrigeren Frequenzen sind die Betriebsfrequenzen des Motors des Pumpenaggregates 2. Alle unerwünschten höheren Frequenzen oberhalb der Grenzfrequenz f₁ werden gedämpft.

Allerdings weist das Filter gleichzeitig, wie im Diagramm b gezeigt ist den Nebeneffekt auf, dass höhere Frequenzen oberhalb einer zweiten Grenzfrequenz f₂ wieder durchgelassen bzw. weniger stark gedämpft werden. So weist das Filter insgesamt eine Filtercharakteristik auf, wie sie im Diagramm c dargestellt ist. Hier ist zu erkennen, dass es eine Frequenz f₃ gibt, bei welcher das Filter seine stärkste Dämpfung aufweist. Dies ist genau der Bereich, welcher sich für die Datenübertragung über die Versorgungsleitung 10 eignet, da in diesem Bereich Störfrequenzen weitgehend eliminiert sind. Aus diesem Grunde wird erfindungsgemäß gemäß einer ersten Variante der Erfindung die Datenübertragung in diesen Bereich der Frequenz f₃ gelegt, in welchem das Filter seine größte Filterwirkung hat. Die Steuereinrichtung 8 sowie das Pumpenaggregat 2 müssen somit entsprechend eingestellt werden, so dass ihre Kommunikation in diesem gewünschten Frequenzbereich erfolgt. Dies kann durch manuelle Einstellung erfolgen. So können an dem Pumpenaggregat 2 und/oder der Steuereinrichtung 8 Schalter zur Auswahl bestimmter Frequenzbereiche vorgesehen sein. Alternativ kann dieser Frequenzbereich automatisch ermittelt werden. So kann beispielsweise das Pumpenaggregat 2 bzw. ein Kommunikationsmodul des Pumpenaggregats 2 zunächst auf mehreren Frequenzen versuchen, Signale an die Steuereinrichtung 8 zu senden. Wenn diese eines der Signale empfängt, kann die Steuereinrichtung 8 bzw. deren Kommunikationsmodul dann ein Bestätigungssignal auf der gleichen Frequenz an das Pumpenaggregat 2 senden, so dass die Elektronik in dem Pumpenaggregat 2 dann feststellen kann, dass in diesem Frequenzbereich eine störungsfreie Datenübertragung möglich ist. D.h. es werden mehrere vorgegebene Frequenzen nacheinander ausprobiert. Alternativ kann auch ein elektronischer Frequenzanalysator vorgesehen sein, welcher den Bereich der geringsten Störungen ermittelt und die Übertragungsfrequenz dann auf diesen Bereich automatisiert einstellt.

Dieses anhand von Fig. 2 erläuterte Verfahren der Datenübertragung basiert somit auf der Idee die Datenübertragung in einem Frequenzbereich stattfinden zu lassen, in welche möglichst wenige Störungen auftreten. Dabei gibt es den Vorteil, dass aufgrund eines meist ohnehin eingesetzten Filters sowieso einen solchen Frequenzbereich mit minimalen Störungen gibt, so dass die Datenübertragung nur in diesen Frequenzbereich gelegt werden muss.

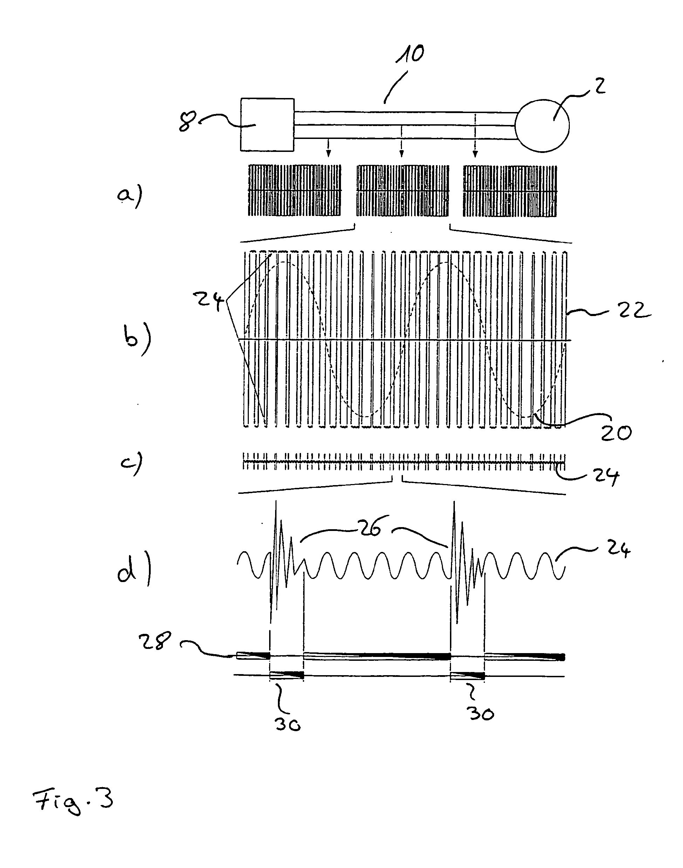

Erfindungsgemäß ist jedoch vorgesehen, die Datenübertragung in einem Zeitabschnitt stattfinden zu lassen, in dem keine Störfrequenzen auftreten. Dies wird nachfolgend anhand der Figuren 3 bis 6 erläutert. Zusätzlich kann dieses erfindungsgemäße Verfahren mit dem vorangehend beschriebenen Verfahren kombiniert werden.

Oben in Fig. 3 ist zunächst noch einmal schematisch die Verbindung zwischen der Steuereinrichtung 8 und dem Pumpenaggregat 2 über die Versorgungsleitung 10 gezeigt. Darunter sind nun verschiedene Frequenzverläufe dargestellt. In der Zeile a ist allgemein der Frequenzverlauf in der Versorgungsleitung, d.h. das Ausgangssignal des Frequenzumrichters 14 dargestellt. Dies ist in der Zeile b in einem Ausschnitt noch einmal vergrößert gezeigt. In dem Diagramm ist der Verlauf der Spannung über die Zeit dargestellt. Das Pumpenaggregat 2 soll grundsätzlich mit einer sinusförmigen Spannung 20 betrieben werden. Über die Wahl der Frequenz ist die Drehzahl des Pumpenaggregates 2 und damit die Förderleistung einstellbar. Um die Frequenz ändern zu können, führt der Frequenzumrichter 14 in bekannter Weise eine Vielzahl von Schaltvorgängen aus, wodurch das Leistungsübertragungssignal 22 erzeugt wird. Durch das Leistungsübertragungssignal 22 bzw. durch dessen sich ändernde Periodendauern wird als Mittelwert das Spannungssignal 20 mit einem sinusförmigen Verlauf angenähert, welcher die Betriebsfrequenz des Motors des Pumpenaggregates 2 darstellt.

Die Datenübertragung auf dem Leistungsübertragungssignal 22, welches als Trägersignal dient, kann immer nur während der Einschaltphase als überlagertes Datenübertragungssignal 24 erfolgen, wobei sich das Vorzeichen des Trägersignals, d.h. des Leistungsübertragungssignals 22 durch das Ein- und Ausschalten der Leistungsschalter ständig ändert. Zeile c in Fig. 3 zeigt das extrahierte Datenübertragungssignal 24 unabhängig von den Vorzeichen des Trägersignals.

Die Zeile d wiederum zeigt einen Ausschnitt dieses Datenübertragungssignals 24. Hier ist zu erkennen, dass genau zu den Schaltpunkten der Leistungsschalter, d.h. wenn das Leistungsübertragungssignal 22 sein Vorzeichen ändert, Störungen 26 im Frequenzverlauf des Datenübertragungssignals 24 auftreten. Dies sind genau die Bereiche, in denen die Datenübertragung ausgesetzt bzw. unterbrochen werden soll. So kennzeichnet der Balken 28 die Zeitabschnitte, in denen die Datenübertragung stattfindet und der Balken 30 kennzeichnet die Zeitabschnitte, in denen die Datenübertragung ausgesetzt wird. Dieses Aussetzen kann entweder dadurch erfolgen, dass bereits das Senden der Daten in diesen Bereichen unterbrochen wird, wenn sich die Stellen der Störungen im Vorfeld erkennen lassen, beispielsweise der Steuereinrichtung 8 bekannt sind. Besonders bevorzugt ist es jedoch, dass der Empfänger, d.h. je nach Richtung der Datenübertragung entweder die Elektronik im Pumpenaggregat 2 oder die Steuereinrichtung 8 die Störungen erkennt und den Empfang bzw. die Auswertung des übertragenen Datenübertragungssignals 24 aussetzt.

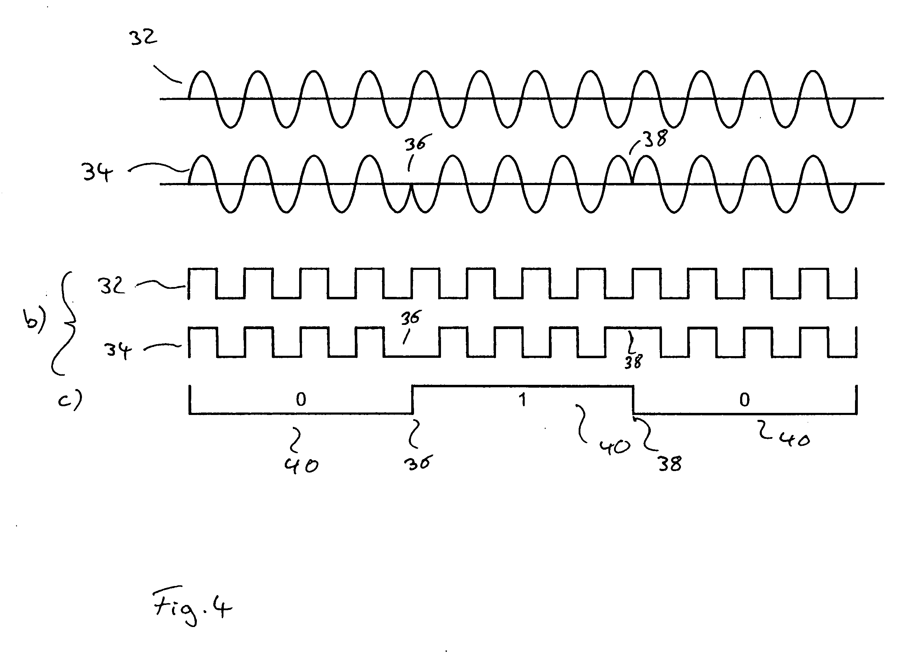

Anhand von Fig. 4 wird die Art und Weise der Datenübertragung noch einmal näher erläutert. Vorzugsweise erfolgt die Datenübertragung nach dem Modulationsprinzip der Kodierung durch Phasenverschiebung (phase shift keying, PSK). Ausgehend von einem Referenzsignal 32 mit konstanter Frequenz und Amplitude wird ein moduliertes Signal 34 erzeugt, wobei jeweils an den Punkten, an denen ein Vorzeichenwechsel von einem übertragenen Bit zu dem nächsten Bit erfolgen soll, d.h. den Anfangspunkten 36 und Endpunkten 38 eines Bits eine Phasenverschiebung um die halbe Wellenlänge stattfindet. D.h. es erfolgt eine digitale Datenübertragung, wobei jedes Bit durch mehrere Perioden, vorzugsweise 256 Schwingungen definiert wird. Die Auswertung bei der Datenübertragung erfolgt allein durch Erfassung der Nulldurchgänge, wie in den Zeilen b in Fig. 4 dargestellt ist. Hier ist zu erkennen, dass es zu den Zeitpunkten 36 und 38 jeweils eine Längere Halbperiode mit gleichem Vorzeichen gibt, wenn die beschriebene Phasenverschiebung in dem modulierten Signal 34 auftritt. Diese längeren Halbperioden bzw. Phasenverschiebungen kennzeichnen den Wechsel eines Vorzeichens eines Bits 40. So ist im gezeigten Beispiel am Zeitpunkt 36 ein Wechsel von 0 zu 1 und am Zeitpunkt 38 wieder ein Wechsel von 1 zu 0 in Zeile c in Fig. 4 zu erkennen. Die Länge eines Bits wird dabei lediglich durch die vorher festgelegte Anzahl von Perioden bzw. Nulldurchgängen vorgegeben. D.h. wenn zwei Bits mit gleichem Vorzeichen aufeinander folgen würden, würde keine Phasenverschiebung im modulierten Signal 34, wie bei den Zeitpunkten 36 und 38 gezeigt, auftreten.

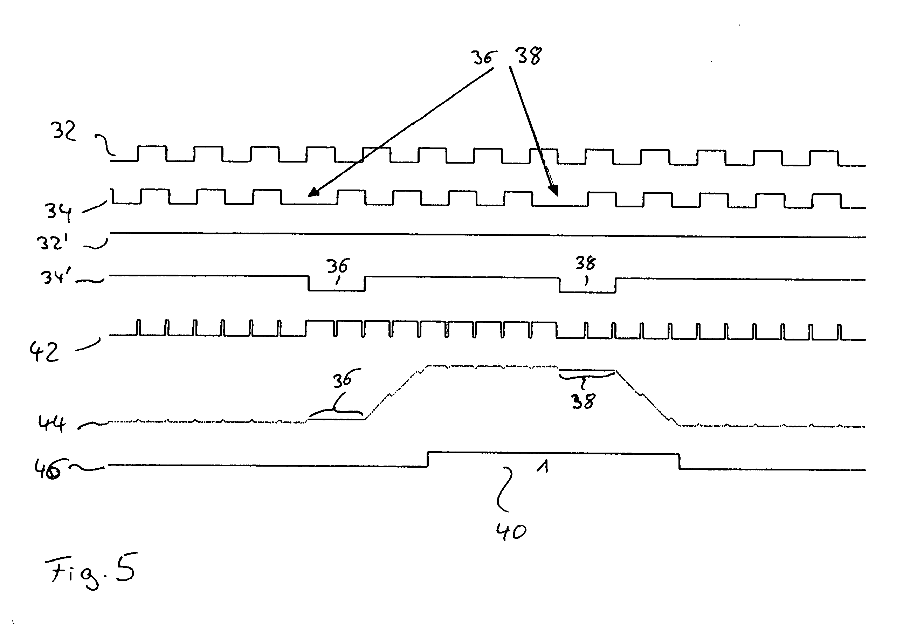

Diese Auswertung der Signalübertragung wird noch einmal näher anhand von Fig. 5 erläutert, in welcher oben wieder das Referenzsignal 32 und das modulierte Signal 34 lediglich in Form der Nulldurchgänge gezeigt sind. Darunter sind ein validiertes Referenzsignal 32' sowie validiertes moduliertes Signal 34' dargestellt. Diese Signale weisen bei konstanter Periodendauer der Signale 32 bzw. 34 jeweils einen konstanten Wert auf, lediglich die Zeitpunkte der Phasenverschiebungen 36 und 38 geben in dem validierten modulierten Signal 34' einen Ausschlag. Durch Überlagerung bzw. Subtraktion des Referenzsignals 32 sowie des modulierten Signals 34 wird ein Phasendedektionssignal 42 erzeugt, welches die Phasenverschiebung zwischen dem Referenzsignal 32 sowie dem modulierten Signal 34 darstellt. Hier ist zu erkennen, dass zwischen den Zeitpunkten 36 und 38 eine Phasenverschiebung um eine halbe Wellenlänge verglichen zu den bereichen vor dem Zeitpunkt 36 und nach dem Zeitpunkt 38 gegeben ist. Diese Phasenverschiebung kennzeichnet den Vorzeichenwechsel eines Bits 40, dessen Länge durch die vorgegebene Anzahl von Perioden zwischen den Zeitpunkten 36 und 38 vorgeben ist.

Als nächstes ist in Fig. 5 ein gefiltertes Signal 44 dargestellt, bei welchem zu erkennen ist, dass die geringen Phasenverschiebungen in dem Signal der Phasendetektion 42 weggefiltert sind und ebenfalls auch die durch die Phasenverschiebung zu den Zeitpunkten 36 und 38 auftretenden Störungen im Frequenzverlauf. Ganz unten in Fig. 5 ist schließlich eine demodulierte Bitsequenz 46 gezeigt, welche den Vorzeichenwechsel eines Bits 40 zwischen den Zeitpunkten 36 erkennen lässt, wobei hier aufgrund der Auswertung und Filterung ein zeitlicher Versatz gegeben ist. Zu den Zeitpunkten 36 und 38 erfolgt keine Auswertung.

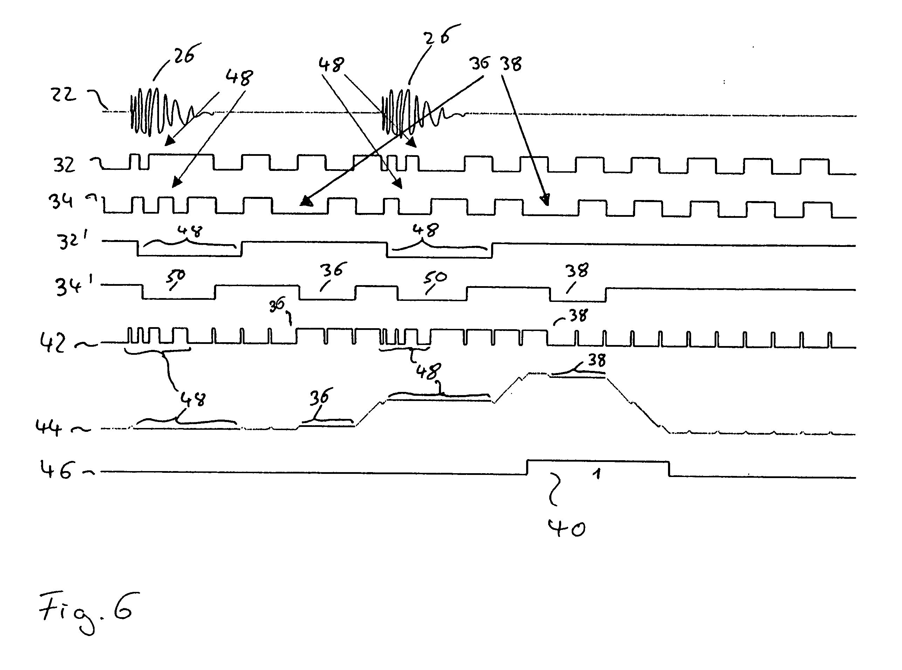

Die Auswertung, welche anhand von Fig. 5 beschrieben wurde, erfolgt ohne Auftreten von Störfrequenzen in dem Trägersignal. Anhand von Fig. 6 wird nun die Auswertung unter Berücksichtigung von Störfrequenzen beschrieben. Diese Störungen 26 sind oben in Fig. 6 in der ersten Zeile gezeigt. Die Zeilen darunter zeigen wieder das Referenzsignal 32 sowie das modulierte Signal 34 sowie das validierte Referenzsignal 32' sowie das validierte modulierte Signal 34'. Hier ist zu erkennen, dass es aufgrund der Störungen 26 im Trägersignal neben den Phasenverschiebungen zu den Zeitpunkten 36 und 38 zu Phasenstörungen 48 sowohl in dem Referenzsignal 32 als auch dem modulierten Signal 34 kommt. Diese sind auch im Verlauf der validierten Signale 32' und 34' zu erkennen.

Die erfindungsgemäße Auswertung des Datenübertragungssignals 34 erfolgt in der Weise, dass zu den Zeitpunkten 48, in welchen die Störungen 26 des Trägersignals auftreten, die Datenübertragung bzw. die Auswertung des Datenübertragungssignals 34 in der Weise ausgesetzt wird, dass hier keine Vorzeichenwechsel eines Bits zum nächsten erfasst werden. Dies erfolgt in der Weise, dass die zeitlichen Bereiche, in denen Störungen 26 auftreten, an dem validierten Referenzsignal 32', welches in den störungsfreien Bereich einen konstanten Verlauf hat, erkannt werden können. Das validierte Referenzsignal weist einen Vorzeichenwechsel nur an den Stellen auf, an denen kein konstanter Frequenzverlauf gegeben ist, weil Störungen 26 auftreten. In diesen Bereichen 48 wird die Auswertung der Datenübertragung ausgesetzt, d.h. während dieser Zeiten werden auch keine Phasenverschiebungen des modulierten Signals 34 gewertet, welche auf einen Vorzeichenwechsel eines Bits hinweisen könnten. So werden die phasenverschobenen Bereiche 50 des validierten modulierten Signals 34' nicht als Vorzeichenwechsel eines Bits gewertet, weil diese in die Bereiche 48 fallen, in denen aufgrund des Phasenverlaufes des Referenzsignals 32 Störungen festgestellt worden sind. Dabei bietet ein Dreileitersystem den Vorteil, dass sowohl das Referenzsignal 32 als auch das modulierte Signal 34 in der Versorgungsleitung 10 zu dem Pumpenaggregat 2 übertragen werden können, so dass beide Signale für eine Signalauswertung zur Verfügung stehen. Es ist jedoch auch möglich, das Referenzsignal 32 aus dem modulierten Signal 34 zu errechnen.

Die Auswertung der Datenübertragung wird in den störungsbehafteten Bereichen 48 in der Weise ausgesetzt, dass in diesen zeitlichen Bereichen wie auch in den Bereichen bzw. Zeitpunkten 36 und 38, bei welchen die Phasenverschiebung einsetzt, die Zählung der Nulldurchgänge des Signals der Phasendetektion 42 ausgesetzt wird, so dass erst nach Ablauf dieser zeitlichen Bereiche die Ausschläge aufgrund der Phasenverschiebung des Signals der Phasendetektion 42 weitergezählt werden, um nach einer bestimmten Anzahl von Nulldurchgängen das Ende eines Bits feststellen und zu prüfen, ob es hier zu einem Vorzeichenwechsel des Bits gekommen ist. So kommt es, wie bei der demodulierten Bitsequenz 46 in Fig. 6 gezeigt, zu einer zeitlichen Verzögerung des Erkennens des Vorzeichenwechsels eines Bits 40, jedoch kann das Bit fehlerfrei erkannt werden, da die auftretenden Störungen 26 in dem Trägersignal 22 so ignoriert werden. Die Kurve 44 in Fig. 6 zeigt wieder ein gefiltertes Signal, bei dem zu erkennen ist, dass die in den zeitlichen Bereichen 36, 38 und 48 auftretende Änderungen der Phasenverschiebung zwischen dem modulierten Signal 34 und dem Referenzsignal 32 nicht berücksichtigt werden.

Wie anhand von Fig. 4 erläutert, erfolgt die Kodierung durch Änderung der Phasenverschiebung zwischen einem Referenzsignal 32 und einem modulierten Signal 34. Entsprechend erfolgt auch das Erkennen von Störungen anhand der Auswertung der Phasenverschiebungen zwischen dem modulierten Signal 34 und dem Referenzsignal 32. Hierzu erfolgt eine Auswertung des validierten Referenzsignals 32' sowie des validierten modulierten Signals 34'. In den Bereichen, in denen diese beiden Signale keinen konstanten Wert aufweisen, wird die Signalauswertung ausgesetzt. Dies sind Bereiche, in denen das modulierte Signal 34 sowie das Referenzsignal 32 keinen konstanten Phasenverlauf aufweist, sondern es zu Änderungen oder Störungen des Phasenverlaufes durch die Störungen 26 oder die Kodierung zu den Zeitpunkten 36 und 38 kommt. Wie an dem gefilterten Signal 44 in Fig. 6 zu sehen ist, wird zu diesen Zeitpunkten 36, 38 und 48 die Auswertung des Phasendetektionssignals 42 ausgesetzt, d.h. hier wird die Zählung der Schwingungen bzw. Perioden des Signals und die Vorzeichenerkennung ausgesetzt.

In Fig. 6 ist zu erkennen, dass alternativ die Störung durch Gesamtbetrachtung des Signalverlaufes des Phasendetektionssignals 42, welches eine Überlagerung des modulierten Signals 34 und des Referenzsignals 32 darstellt, erfolgt. Es ist zu erkennen, dass die Änderung der Phasenverschiebung in den Bereichen 48 deutlich kürzer sind als die ein Bit markierende Zeit zwischen den Zeitpunkten 36 und 38. Durch geeignete Auswertung können somit auch aufgrund des Unterschiedes in der Zeitdauer die relativ kurzen Störungen 36 im Vergleich zur zeitlichen Dauer eines Bits 40 eliminiert werden.

### Bezugszeichenliste

- 2: Tauchpumpe
- 4: Pumpensumpf
- 6: Druckleitung
- 8: Steuereinrichtung
- 10: Versorgungsleitung
- 12: Stromversorgung
- 14: Frequenzumrichter
- 16: Filter
- 18: Steuerleitung
- 20: Spannungssignal
- 22: Leistungsübertragungssignal, Trägersignal
- 24: Datenübertragungssignal
- 26: Störungen
- 28, 30: Balken
- 32: Referenzsignal
- 32': Validiertes Referenzsignal
- 34: Moduliertes Signal, Datenübertragungssignal
- 34': Validiertes moduliertes Signal
- 36, 38: Zeitpunkte, Vorzeichenwechsel eines Bits
- 40: Bit
- 42: Signal der Phasendetektion
- 44: Gefiltertes Signal
- 46: Demodulierte Bitsequenz
- 48: Bereiche mit Störungen
- 50: Phasenverschobene Bereiche

## Patentansprüche

1. Verfahren zur Datenübertragung zwischen einem Pumpenaggregat (2) und einer Steuereinrichtung (8), wobei das Pumpenaggregat (2) zur Energieversorgung über zumindest eine elektrische Versorgungsleitung (10) mit einem Frequenzumrichter (14) verbunden ist, welcher eine Versorgungsspannung gewünschter Frequenz erzeugt,
**dadurch gekennzeichnet, dass**
die Datenübertragung über die elektrische Versorgungsleitung (10) erfolgt, wobei einem von einer Versorgungsspannung gebildeten Trägersignal (22) ein Datenübertragungssignal (34) aufmoduliert wird, und eine Auswertung eines von dem Pumpenaggregat (2) oder der Steuereinrichtung (8) empfangenen Datenübertragungssignals (34) nur in störungsarmen zeitlichen Bereichen eines von einer Versorgungsspannung gebildeten Trägersignals (22) erfolgt, indem die Datenübertragung und/oder die Auswertung des Datenübertragungssignals (34) in den Momenten des Ein- und Ausschaltens der Leistungsschalter des Frequenzumrichters (14) ausgesetzt wird.

2. Verfahren nach Anspruch 1, **dadurch gekennzeichnet, dass** die Datenübertragung zwischen der Steuereinrichtung (8) und der Versorgungsleitung (10) über eine induktive oder kapazitive Kopplung erfolgt.

3. Verfahren nach einem der vorangehenden Ansprüche, **dadurch gekennzeichnet, dass** die Zeiten, in denen Störungen (28) des Trägersignals (22) auftreten, automatisch erkannt werden und während dieser Zeiten die Datenübertragung und/oder die Auswertung des Datenübertragungssignals (34) ausgesetzt wird.

4. Verfahren nach Anspruch 3, **dadurch gekennzeichnet, dass** die Zeiten, in denen Störungen (26) des Trägersignals (22) auftreten, durch Analyse einer elektrischen Größe, insbesondere durch Frequenzanalyse oder Phasendetektion des in der Versorgungsleitung (10) übertragenen Signals erkannt werden.

5. Verfahren nach Anspruch 4, **dadurch gekennzeichnet, dass** zur Durchführung der Analyse über die Versorgungsleitung (10) in einem Drei-Leiter-System ein Referenzsignal (32) sowie ein moduliertes Signal (34) übertragen werden.

6. Verfahren nach einem der vorangehenden Ansprüche, **dadurch gekennzeichnet, dass** die Datenübertragung in einem störungsarmen Frequenzbereich (f₃) des Trägersignals (22) erfolgt, wobei vorzugsweise eine Minimierung von Störungen durch ein zwischen dem Frequenzumrichter (14) und dem Pumpenaggregat (2) angeordnetes elektrisches Filter (16) erfolgt.

7. Verfahren nach Anspruch 6, **dadurch gekennzeichnet, dass** der Frequenzbereich (f₃), in welchem die Datenübertragung erfolgt, abhängig von dem eingesetzten Filter (16) an der Steuereinrichtung (8) und/oder dem Pumpenaggregat (2) eingestellt wird oder die Steuereinrichtung (8) und/oder das Pumpenaggregat (2) selbsttätig den von dem verwendeten Filter (16) abhängigen Frequenzbereich (f₃) für die Datenübertragung ermitteln.

8. Pumpensystem mit einem Pumpenaggregat (2) und einer von diesem räumlich getrennten Steuereinrichtung (8), wobei das Pumpenaggregat (2) zumindest eine elektrische Versorgungsleitung (10) zur Verbindung mit einem Frequenzumrichter (14) aufweist,
**dadurch gekennzeichnet, dass**
das Pumpenaggregat (2) und die Steuereinrichtung (8) Kommunikationsmodule aufweisen, welche zur Datenübertragung über die Versorgungsleitung (10) miteinander in Kommunikationsverbindung stehen, wobei einem von einer Versorgungsspannung gebildeten Trägersignal (22) ein Datenübertragungssignal (34) aufmoduliert wird und die Kommunikationsmodule derart ausgebildet sind, dass eine Auswertung eines von einem der Kommunikationsmodule empfangenen Datenübertragungssignals (34) nur in störungsarmen zeitlichen Bereichen eines von einer Versorgungsspannung gebildeten Trägersignals (22) erfolgt, indem die Datenübertragung und/oder die Auswertung des Datenübertragungssignals (34) in den Momenten des Ein- und Ausschaltens der Leistungsschalter des Frequenzumrichters (14) ausgesetzt wird.

9. Pumpensystem nach Anspruch 8, **dadurch gekennzeichnet, dass** die Kommunikationsmodule eine Signalunterbrechungseinrichtung aufweisen, welche die Kommunikation und/oder Auswertung des Datenübertragungssignals (34) in Zeiten, in denen Störungen (26) des Trägersignals (22) auftreten, aussetzt.

10. Pumpensystem nach einem der Ansprüche 8 oder 9, **dadurch gekennzeichnet, dass** zumindest eines der Kommunikationsmodule einen Signalanalysator, insbesondere in Form eines Frequenzanalysators oder Phasendetektors, zum Erkennen von Störungen (26) des Trägersignals (22) beinhaltet.

11. Pumpensystem nach einem der Ansprüche 8 bis 10, **dadurch gekennzeichnet, dass** die Kommunikationsmodule derart ausgebildet sind, dass eine Kommunikation zwischen den Kommunikationsmodulen in einem Frequenzbereich (f₃) erfolgt, in welchem die Oberwellen des von dem Versorgungsstrom gebildeten Trägersignals gedämpft sind, wobei zur Dämpfung der Oberwellen vorzugsweise ein zwischen dem Frequenzumrichter (14) und der Steuereinrichtung (8) angeordnetes elektrisches Filter (16) vorgesehen ist.

12. Pumpensystem nach Anspruch 11, **dadurch gekennzeichnet, dass** der Frequenzbereich (f₃) für die Kommunikation an der Steuereinrichtung (8) und/oder dem Pumpenaggregat (2) einstellbar ist und/oder dass zumindest eines der Kommunikationsmodule zur selbsttätigen Ermittlung des Frequenzbereiches (f₃) für die Kommunikation ausgebildet ist.

13. Pumpensystem nach einem der Ansprüche 8 bis 12, **dadurch gekennzeichnet, dass** in der Steuereinrichtung (8) ein Signaltransformator zur induktiven oder kapazitiven Signalübertragung zwischen der Versorgungsleitung (10) und dem Kommunikationsmodul der Steuereinrichtung (8) angeordnet ist.

## Claims

1. A method for data transmission between a pump assembly (2) and a control device (8), wherein the pump assembly (2) for energy supply is connected via at least one electrical supply lead (10) to a frequency converter (14), said frequency converter producing a supply voltage of the desired frequency,
**characterised in that**
the data transmission is effected via the electrical supply lead (10), wherein a data transmission signal (34) is modulated upon a carrier signal (22) formed by a supply voltage, and an evaluation of a data transmission signal (34) received by the pump assembly (2) or by the control device (8) is only effected in low-disturbance temporal intervals of a carrier signal (22) formed by a supply voltage, by way of the data transmission and/or the evaluation of the data transmission signal (34) being suspended in the moments of switching the power switches of the frequency converter (14) on and off.

2. A method according to claim 1, **characterised in that** the data transmission between the control device (8) and the supply lead (10) is effected via an inductive or capacitive coupling.

3. A method according to one of the preceding claims, **characterised in that** the times in which disturbances (28) of the carrier signal (22) occur, are automatically recognised, and the data transmission and/or the evaluation of the data transmission signal (34) is suspended during these times.

4. A method according to claim 3, **characterised in that** the times in which disturbances (26) of the carrier signal (22) occur, are recognised by way of analysis of an electric variable, in particular by way of frequency analysis or phase detection, of the signal transmitted in the supply lead (10).

5. A method according to claim 4, **characterised in that** a reference signal (32) as well as a modulated signal (34) are transmitted via the supply lead (10) in a three-wire system, for carrying out the analysis.

6. A method according to one of the preceding claims, **characterised in that** the data transmission is effected in a low-disturbance frequency region (f₃) of the carrier signal (22), wherein preferably a minimisation of disturbances is effected by way of an electrical filter (16) arranged between the frequency converter (14) and the pump assembly (2).

7. A method according to claim 6, **characterised in that** the frequency region (f₃) in which the data transmission is effected, is set depending of the applied filter (16), at the control device (8) and/or at the pump assembly (2), or the control device (8) and/or the pump assembly (2) automatically determine the frequency region (f₃) for the data transmission, said region being dependent on the applied filter (16).

8. A pump system with a pump assembly (2) and with a control device (8) which is spatially separated from this, wherein the pump assembly (2) comprises at least one electrical supply lead (10) for the connection to a frequency converter (14),
**characterised in that**
the pump assembly (2) and the control device (8) comprise communication modules which for data transmission are in communication connection with one another via the supply lead (10), wherein a data transmission signal (34) is modulated upon a carrier signal (22) formed by a supply voltage, and the communication modules are designed in a manner such that an evaluation of a data transmission signal (34) received by one of the communication modules is only effected in low-disturbance temporal intervals of a carrier signal (22) formed by a supply voltage, by way of the data transmission and/or the evaluation of the data transmission signal (34) being suspended in the moments of switching the power switches of the frequency converter (14) on and off.

9. A pump system according to claim 8, **characterised in that** the communication modules comprise a signal interruption device which suspends the communication and/or the evaluation of the data transmission signal (34) in times in which disturbances (26) of the carrier signal (22) occur.

10. A pump system according to one of the claims 8 or 9, **characterised in that** at least one of the communication modules contains a signal analyser, in particular in the form of a frequency analyser or a phase detector, for recognising disturbances (26) of the carrier signal (22).

11. A pump system according to one of the claims 8 to 10, **characterised in that** the communication modules are designed in a manner such that a communication between the communication modules is effected in a frequency region (f₃), in which the harmonics of the carrier signal formed by the supply current are damped, wherein preferably an electrical filter (16) is provided between the frequency converter (14) and the control device (8), for damping the harmonics.

12. A pump system according to claim 11, **characterised in that** the frequency region (f₃) for the communication may be set at the control device (8) and/or the pump assembly (2), and/or that at least one of the communication modules is designed for automatic determination of the frequency region (f₃) for the communication.

13. A pump system according to one of the claims 8 to 12, **characterised in that** a signal transformer for the inductive or capacitive signal transmission between the supply lead (10) and the communication module of the control device (8), is arranged in the control device (8).

## Revendications

1. Procédé de transmission de données entre un groupe motopompe (2) et un dispositif de commande (8), dans lequel le groupe motopompe (2) est relié, pour son alimentation en énergie, via au moins une ligne d'alimentation électrique (10), à un convertisseur de fréquence (14) qui génère une tension d'alimentation de fréquence souhaitée,
**caractérisé en ce que**
la transmission de données s'opère via la ligne d'alimentation électrique (10), un signal de transmission de données (34) étant modulé sur un signal porteur (22) formé par une tension d'alimentation, et une évaluation d'un signal de transmission de données (34) reçu par le groupe motopompe (2) ou le dispositif de commande (8) s'opérant uniquement dans des plages temporelles à faible niveau de perturbations d'un signal porteur (22) formé par une tension d'alimentation, par le fait que la transmission de données et/ou l'évaluation du signal de transmission de données (34) est/sont interrompue(s) dans les moments de la mise en tension et hors tension des interrupteurs de puissance du convertisseur de fréquence (14).

2. Procédé selon la revendication 1, **caractérisé en ce que** la transmission de données entre le dispositif de commande (8) et la ligne d'alimentation (10) s'opère par un couplage inductif ou capacitif.

3. Procédé selon l'une des revendications précédentes, **caractérisé en ce que** les périodes pendant lesquelles surviennent des perturbations (28) du signal porteur (22) sont identifiées automatiquement, et **en ce que** pendant ces périodes, la transmission de données et/ou l'évaluation du signal de transmission de données (34) est/sont interrompue(s).

4. Procédé selon la revendication 3, **caractérisé en ce que** les périodes pendant lesquelles surviennent des perturbations (26) du signal porteur (22) sont identifiées par analyse d'une grandeur électrique, en particulier par une analyse fréquentielle ou une détection de phase du signal transmis dans la ligne d'alimentation (10).

5. Procédé selon la revendication 4, **caractérisé en ce que** pour réaliser l'analyse, on transmet via la ligne d'alimentation (10), dans un montage à trois conducteurs, un signal de référence (32) et un signal modulé (34).

6. Procédé selon l'une des revendications précédentes, **caractérisé en ce que** la transmission de données s'opère dans une plage de fréquence (f₃) du signal porteur (22) associée à un faible niveau de perturbations, une minimisation des perturbations s'opérant, de préférence, par un filtre électrique (16) disposé entre le convertisseur de fréquence (14) et le groupe motopompe (2).

7. Procédé selon la revendication 6, **caractérisé en ce que** la plage de fréquence (f3) dans laquelle s'opère la transmission de données est réglée, en fonction du filtre (16) utilisé, au niveau du dispositif de commande (8) et/ou du groupe motopompe (2), ou le dispositif de commande (8) et/ou le groupe motopompe (2) détermine(nt) automatiquement la plage de fréquence (f₃) pour la transmission des données, qui est fonction du filtre (16) utilisé.

8. Système de pompe comportant un groupe motopompe (2) et un dispositif de commande (8) séparé de celui-ci dans l'espace, dans lequel le groupe motopompe (2) présente au moins une ligne d'alimentation électrique (10) pour raccordement à un convertisseur de fréquence (14),
**caractérisé en ce que**
le groupe motopompe (2) et le dispositif de commande (8) présentent des modules de communication qui, pour la transmission de données, sont en liaison de communication l'un avec l'autre par le biais de la ligne d'alimentation (10), un signal de transmission de données (34) étant modulé sur un signal porteur (22) formé par une tension d'alimentation, et les modules de communication étant conçus de façon telle qu'une évaluation d'un signal de transmission de données (34) reçu par le module de communication s'opère uniquement dans des plages temporelles à faible niveau de perturbations d'un signal porteur (22) formé par une tension d'alimentation, par le fait que la transmission de données et/ou l'évaluation du signal de transmission de données (34) est/sont interrompue(s) dans les moments de la mise sous tension et hors tension des interrupteurs de puissance du convertisseur de fréquence (14).

9. Système de pompe selon la revendication 8, **caractérisé en ce que** les modules de communication présentent un dispositif d'interruption du signal qui interrompt la communication et/ou l'évaluation du signal de transmission de données (34) lors de périodes pendant lesquelles surviennent des perturbations (26) du signal porteur (22).

10. Système de pompe selon l'une des revendications 8 ou 9, **caractérisé en ce qu'**au moins l'un des modules de communication comporte un analyseur de signal, en particulier sous la forme d'un analyseur de fréquence ou d'un détecteur de phase, afm d'identifier des perturbations (26) du signal porteur (22).

11. Système de pompe selon l'une des revendications 8 à 10, **caractérisé en ce que** les modules de communication sont conçus de façon que s'opère une communication entre les modules de communication dans une plage de fréquence (f₃) dans laquelle les ondes harmoniques du signal porteur formé par le courant d'alimentation sont amorties, un filtre électrique (16) disposé entre le convertisseur de fréquence (14) et le dispositif de commande (8) étant prévu, de préférence, pour amortir les harmoniques.

12. Système de pompe selon la revendication 11, **caractérisé en ce que** la plage de fréquence (f₃) pour la communication avec le dispositif de commande (8) et/ou le groupe motopompe (2) est réglable, et/ou **en ce qu'**au moins l'un des modules de communication est conçu pour déterminer automatiquement la plage de fréquence (f₃) pour la communication.

13. Système de pompe selon l'une des revendications 8 à 12, **caractérisé en ce que**, dans le dispositif de commande (8), est disposé un transformateur de signal permettant une transmission inductive ou capacitive du signal entre la ligne d'alimentation (10) et le module de communication du dispositif de commande (8).
